# EUROPÄISCHE PATENTSCHRIFT

(11) **EP 2 006 157 B1**
(45) Veröffentlichungstag und Bekanntmachung des Hinweises auf die Patenterteilung: **20.02.2013**
(21) Anmeldenummer: 08016972.5
(22) Anmeldetag: 18.05.2007
(51) Int. Cl.: B60Q 1/26, B60R 1/12

(54) **Außenspiegel eines Fahrzeugs**
Exterior vehicle mirror
Rétroviseur d'un véhicule

(30) Priorität: 23.05.2006 DE 102006025070
(43) Veröffentlichungstag der Anmeldung: 24.12.2008
(62) Teilanmeldung aus: 07009920.5
(73) Patentinhaber: SMR Patents S.à.r.l., 1653 Luxembourg (LU)
(72) Erfinder: Apfelbeck, Robert, 94447 Plattlingen (DE); Liesener, Alf, 73614 Schorndorf (DE); Hezinger, Klaus-Dieter, 73770 Denkendorf (DE); Schmierer, Arne, 73230 Kirchheim (DE)
(74) Vertreter: Weber-Bruls, Dorothée

(56) Entgegenhaltungen:
- EP-A- 1 428 745
- DE-A1- 10 251 380
- DE-U1- 20 001 407
- US-A1- 2004 190 303

## Beschreibung

Die Erfindung betrifft einen Außenspiegel eines Fahrzeugs nach dem Oberbegriff des Anspruchs 1.

Außenspiegel, in die eine Lichtfunktion in Form eines Blinkersignals integriert ist, sind bekannt. Dazu ist in einer nach vorne weisenden Rückwand des Spiegelgehäuses ein Blinkermodul integriert. Innerhalb des Spiegelgehäuses sind verschiedene Komponenten, wie etwa ein Stellmotor zur Verkippung des Spiegels, für eine etwaige Beheizungseinrichtung oder zum Heranklappen des Außenspiegels in eine Parkposition angeordnet.

Aus der US 2004/0190303 A1 ist ein Außenspiegel eines Fahrzeugs bekannt, der in seinem nach vorne weisenden Gehäuseteil Leuchtdioden mit verschiedenen Lichtfunktionen aufweist, die in einem Modul montiert sind. So sind auf einem Winkel des Moduls angeordnete, seitlich abstrahlende Leuchtdioden vorgesehen, die als Blinkleuchten betrieben werden und auf der Hauptfläche quer dazu Leuchtdioden, die nach vorne abstrahlen und als Tagfahrlicht betrieben werden können.

Aufgabe der Erfindung ist es, einen Außenspiegel eines Fahrzeugs anzugeben, dessen Anwendungsbereich trotz begrenztem Bauraum erweitert ist.

Die Aufgabe wird erfindungsgemäß durch die Merkmale des Anspruchs 1 gelöst. Günstige Ausgestaltungen und Vorteile der Erfindung ergeben sich aus den weiteren Ansprüchen und der Beschreibung.

Der erfindungsgemäße Außenspiegel eines Fahrzeugs weist eine im montierten Zustand nach rückwärts gerichtete Öffnung in einem Gehäuse mit einem

Hohlraum auf, in den ein Spiegel aufnehmbar ist, sowie eine nach vorne gerichtete, den Hohlraum begrenzende Rückwand mit einer Außenfläche. Wenigstens zwei verschiedene Lichtfunktionen sind an der Außenfläche und/oder am Spiegel darstellbar, wobei die Lichtfunktionen Leuchtmittel umfassen, die innerhalb des Gehäuses in einem oder mehreren, insbesondere wenigen, vorzugsweise höchstens zwei, Modulen zusammengefasst sind. Die Integration der Lichtfunktionen erfolgt über das oder die Module mit verschiedenen Signalfunktionen, die in den Außenspiegel eingebaut werden. Vorzugsweise ist jedem Modul wenigstens eine Lichtfunktion bzw. Signalfunktion, zugeordnet. Die Leuchtmittel sind in einem ein Modul bildenden Einsatz angeordnet, der in die Rückwand des Außenspiegels eingelassen ist.

Die Leuchtmittel sind für verschiedene Lichtfunktionen in einem gemeinsamen Modul angeordnet, wobei erste Leuchtmittel in Durchbrüche innerhalb von nach vorne geöffneten Reflektoren ragen und kranzartig von einer Mehrzahl von zweiten Leuchtmitteln umgeben sind. Die Leuchtmittel geben verschieden farbiges Licht ab. Die Lichtfunktionen sind wenigstens zwei aus der Gruppe Blinklicht, Tagfahrlicht, Seitenmarkierungslicht (SML), Standlicht, Positionslicht (PO-Licht), Begrenzungslicht, Umfeldlicht, Totwinkelüberwachungslicht (SWA). Das Totwinkelüberwachungslicht hinterleuchtet vorzugsweise eine Anzeige, die der Fahrer im Spiegelglas sehen kann, während die anderen Lichtfunktionen vorzugsweise im Bereich der Rückwand, die nicht direkt vom Fahrer einsehbar ist, angeordnet sind, und deren Leuchten Licht nach unten, vorne, zur Seite und/oder nach oben abstrahlen.

Dies ermöglicht eine vorteilhafte Konfektionierung einer Leuchte für eine oder mehrere Lichtfunktionen bei dem Zusammenbau des Außenspiegels und erleichtert so den Zusammenbau des Außenspiegels. Weiterhin kann der Einsatz außerordentlich kompakt ausgeführt sein.

Vorteilhaft ergibt sich, dass auch eine Mehrzahl von Leuchtmitteln zur Darstellung einer Lichtfunktion verwendet werden können, die sehr kompakt auf dem Modul angeordnet sein können. Verdrahtungen können sehr kurz sein oder in dem Modul beispielsweise als Leiterbahnen einer Platine integriert sein. Eine Platine kann dann sowohl als Träger des oder der Leuchtmittel, zur Befestigung im Gehäuse als auch zur Energieversorgung dienen. Es kann eine gemeinsame Lichtansteuerungseinheit vorgesehen sein, die im Gehäuse integriert ist. Bevorzugt umfasst ein Modul einen oder mehrere Träger für das oder die Leuchtmittel, Stromzuführungsmittel, Befestigungsmittel zur Befestigung im Gehäuse sowie eine Elektronik zur Ansteuerung des oder der Leuchtmittel. Die Leuchtmittel können durch korrespondierende Durchbrüche im Gehäuse nach außen Licht abstrahlen, oder sie sind in einem ein Modul bildenden Einsatz in das Gehäuse eingesetzt.

Vorzugsweise sind das oder die Module innenseitig an der Rückwand angeordnet. Mit besonderem Vorteil weist dabei das Modul zum Beaufschlagen der verschiedenen Lichtfunktionen elektrische Elemente auf, die über wenige Platinen im Hohlraum, beispielsweise auf ein oder zwei Platinen, aufgeteilt sind. Eine geeignete Anzahl wird der Fachmann bedarfsabhängig auswählen. Dadurch ist eine Montage auch mit geringem verfügbaren Bauraum möglich.

Es kann eine transparente Lichtscheibe am Einsatz vorgesehen sein, so dass dieser ohne weiteres in den Außenspiegel eingesetzt werden und eine separate Versiegelung vermieden werden kann. Alternativ kann jedoch beispielsweise eine separate Abdeckung oder dergleichen vorgesehen sein.

Zusätzlich kann in der Rückwand wenigstens eine nach rückwärts gerichtete Vertiefung eingebracht sein, die einen Durchbruch für ein Leuchtmittel aufweist, welches vom Hohlraum nach außen weist. Dabei kann die wenigstens eine Vertiefung oval ausgebildet sein und/oder es kann eine Vertiefung rund ausgebildet sein.

Vorteilhaft dient die wenigstens eine Vertiefung als Reflektor des Leuchtmittels. Sind als Leuchtmittel LEDs (Licht emittierende Dioden) eingesetzt, kann die Vertiefung das abgestrahlte Licht wenigstens teilweise so reflektieren, dass eine gewisse Ausrichtung des abgestrahlten Lichts erfolgt. Ist die Lichtfunktion beispielsweise ein Tagfahrlicht, kann ein vorausfahrendes Fahrzeug das nachfolgende Fahrzeug besser erkennen, was Sicherheit im Straßenverkehr erhöht.

Die ovale Vertiefung kann etwa waagrecht angeordnet sein, wobei das Leuchtmittel im Bereich eines spiegelnahen Rands angeordnet ist und die Vertiefung sich vom Rand weg erstreckt.

Vorteilhaft kann die Vertiefung so tief ausgebildet sein, dass eine seitliche Erkennbarkeit der Lichtfunktion gegeben ist.

Besonders zweckmäßig kann jedes Leuchtmittel mit einer nach außen abdichtenden Versiegelung versehen sein. Damit kann ein Eindringen von Schmutz oder Feuchtigkeit in den Außenspiegel vermieden werden.

Die Versiegelung ist zweckmäßigerweise als klare Schicht über den Leuchtmitteln angeordnet, beispielsweise als Überzug darüber gegossen.

Mit Vorteil ist die Versiegelung als Abdeckung auf das Gehäuse aufgesetzt. Dabei kann sich die Abdeckung über die gesamte Rückwand erstrecken, oder die Abdeckung kann auf einen Bereich mit der einen oder mehreren Vertiefungen und/oder dem Einsatz beschränkt sein.

Vorteilhaft können die Leuchtmittel so vorgesehen sein, dass unterschiedliche Farben darstellbar sind. So kann das Totwinkelüberwachungslicht eine Farbe abhängig von einer Entfernung zu einem Hindernis abgeben. Dies kann mit dem Fachmann geläufigen Mitteln erfolgen, wie Filterelemente oder verschiedenfarbige Leuchtmittel, die entsprechend aktiviert werden können.

Weitere Vorteile und Einzelheiten der Erfindung werden im Folgenden, anhand von in der Zeichnung beschriebenen bevorzugten Ausführungsbeispielen näher erläutert, ohne auf diese Ausführungsbeispiele beschränkt zu sein.

Es zeigen:
- Fig. 1a, b: einen Außenspiegel nach einer bevorzugten Ausgestaltung mit einem Einsatz mit Leuchtmitteln in Draufsicht (Fig. 1a) und als Schnitt (Fig. 1 b), und
- Fig. 2a, b: einen Außenspiegel mit Vertiefungen in Draufsicht (Fig. 2a) und als Schnitt (Fig. 2b); und

In den Figuren sind funktional gleich bleibende Elemente jeweils mit denselben Bezugszeichen beziffert.

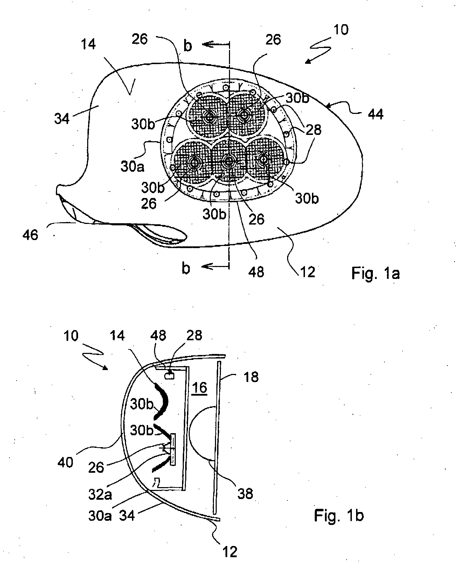

In den Figuren 1a und 1b ist eine Ausgestaltung eines bevorzugten Außenspiegels 10 dargestellt, wobei Figur 1a eine Draufsicht und Figur 1b einen Schnitt entlang der Linie b-b zeigt..

Der Außenspiegel 10 ist mit einem fahrzeugseitigen Ansatz 46, der in der Figur nur angedeutet ist, an einer Karosserie eines Fahrzeugs angeordnet. Der Außenspiegel 10 umfasst ein Gehäuse 12 mit einem Hohlraum 16 und mit einer im montierten Zustand nach rückwärts gerichteten Öffnung 36, in die ein Spiegel 18 mit einem Stellmotor 38 zum Verkippen des Spiegels 18 eingesetzt ist. Der Hohlraum 16 ist in Vorwärtsrichtung durch eine nach vorne gewölbte Rückwand 34 mit einer Außenfläche 14 begrenzt.

An der Rückwand 34 sind mehrere verschiedene Lichtfunktionen bzw. Signalfunktionen dargestellt, deren Leuchtmittel 26, 28 in einem Modul 48 zusammengefasst sind, welches in die Rückwand 34 eingelassen ist. Dazu weist die Rückwand 34 einen Durchbruch 30a auf.

Die fünf Leuchtmittel 26 ragen in Durchbrüche 32a innerhalb von nach vorne geöffneten Reflektoren 30b und sind kranzartig von einer Mehrzahl von Leuchtmitteln 28, von denen der Übersichtlichkeit wegen nur einige bezeichnet sind, umgeben. Die Leuchtmittel 28 sitzen ebenfalls in kleinen, nicht näher bezeichneten Reflektoren Die Leuchtmittel 26 und 28 geben unterschiedlich farbiges Licht ab.

Das als Einsatz ausgebildete Modul 48 ist mit einer als transparente Abdeckung ausgebildete Versiegelung 40 abgedeckt und gegen Eindringen von Schmutz und Feuchtigkeit geschützt. Die Versiegelung 40 kann Bestandteil des Moduls 48 sein, oder es kann wie im nächsten Ausführungsbeispiel eine entsprechende Abdeckung über die gesamte Rückwand 34 vorgesehen sein.

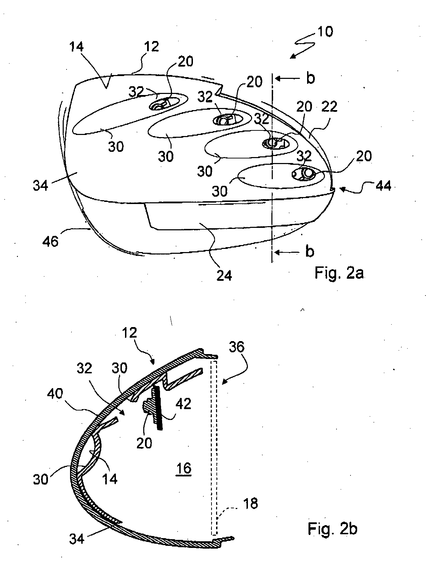

Die Figuren 2a und 2b illustrieren eine Ausgestaltung eines erfindungsgemäßen Außenspiegels 10 eines Fahrzeugs in Draufsicht auf eine Rückwand 34 (Figur 2a) und als Schnitt entlang der Linie b-b (Figur 2b), die zusätzlich mit der in Fig. 1a und 1b dargestellten Ausgestaltung vorgesehen ist, wobei der in Fig. 1 a, 1 b abgebildete Einsatz nicht dargestellt ist.

Der Außenspiegel 10 ist mit einem fahrzeugseitigen Ansatz 46, der in der Figur nur angedeutet ist, an einer Karosserie eines Fahrzeugs angeordnet. Der Außenspiegel 10 umfasst ein Gehäuse 12 mit einem Hohlraum 16 und mit einer im montierten Zustand nach rückwärts gerichteten Öffnung 36, in die ein Spiegel 18 eingesetzt ist. Der Hohlraum 16 ist in Vorwärtsrichtung durch eine nach vorne gewölbte Rückwand 34 mit einer Außenfläche 14 begrenzt.

An der Rückwand 34 sind mehrere verschiedene Lichtfunktionen bzw. Signalfunktionen dargestellt, deren Leuchtmittel 20, 22, 24 in einem schematisch angedeuteten Modul 42 zusammengefasst sind, welches innenseitig an der Rückwand 34 befestigt ist.

Beispielhaft können die Leuchtmittel 22 beispielsweise einem Positionslicht und Leuchtmittel 24 einem nach unten abstrahlenden Umgebungslicht zugeordnet sein, während die Leuchtmittel 20, die vorzugsweise als LEDs ausgebildet sind, als Blinklicht eingesetzt sein können. Die vier Leuchtmittel 20 sind in vier nach rückwärts gerichtete Vertiefungen 30 eingebracht und ragen aus dem Hohlraum 16 durch jeweils einen Durchbruch 32 in der Rückwand 34 des Gehäuses 12 nach außen. Die oval ausgebildeten Vertiefungen 30 verlaufen etwa waagrecht, wobei die Leuchtmittel 20 im Bereich eines spiegelnahen Rands 44 des Gehäuses 12 angeordnet sind und die Vertiefung 30 sich vom Rand 44 weg erstreckt. Die Vertiefungen 30 dienen als eine Art Reflektor des Leuchtmittels 20 und ermöglichen durch eine wenigstens geringe Richtwirkung des Lichts eine Erkennung der Leuchtmittel 20 von vorne und von der Seite.

Vorteilhaft kann die Vertiefung 30 so tief ausgebildet sein, dass eine seitliche Erkennbarkeit der Lichtfunktion gegeben ist.

Die Leuchtmittel 20, und auch 22 und 24, sind mit einer nach außen abdichtenden Versiegelung 40 versehen, die als transparente Abdeckung auf die Rückwand 34 des Außenspiegels 10 aufgesetzt ist. Die als Abdeckung ausgebildete Versiegelung 40 ermöglicht auch eine Lichtabgabe nach unten. Durch die glatte und alles übergreifende Gestalt der Versiegelung 40 ist das Innere des Außenspiegels 10 vor Verschmutzung oder dem Eindringen von Feuchtigkeit geschützt, und die Versiegelung 40 lässt sich leicht von außen reinigen.

### Bezugszeichenliste

- 10: Außenspiegel
- 12: Gehäuse
- 14: Außenfläche
- 16: Hohlraum
- 18: Spiegelscheibe
- 20: Leuchtmittel
- 22: Leuchtmittel
- 24: Leuchtmittel
- 26: Leuchtmittel
- 28: Leuchtmittel
- 30: Vertiefung
- 30a: Durchbruch
- 30b: Reflektor
- 32: Durchbruch
- 32a: Durchbruch
- 34: Rückwand
- 36: Öffnung
- 38: Verstellmotor
- 40: Versiegelung
- 42: Steuerungseinrichtung
- 44: Rand
- 46: fahrzeugseitiger Ansatz
- 48: Modul

## Patentansprüche

1. Außenspiegel eines Fahrzeugs mit einer im montierten Zustand nach rückwärts gerichteten Öffnung (36) in einem Gehäuse (12) mit einem Hohlraum (16), in den ein Spiegel (18) aufnehmbar ist, sowie eine nach vorne gerichtete, den Hohlraum (16) begrenzende Rückwand (34) mit einer Außenfläche (14), wobei wenigstens zwei verschiedene Lichtfunktionen an der Außenfläche (14) und/oder am Spiegel (18) darstellbar sind, wobei die Lichtfunktionen Leuchtmittel (20, 22, 24, 26, 28) umfassen, die innerhalb des Gehäuses (12) in einem oder mehreren Modulen (42, 48) zusammengefasst sind, **dadurch gekennzeichnet,**
**dass** die Leuchtmittel (26, 28) in einem eines der Module (48) bildenden Einsatz angeordnet sind, das in die Rückwand (34) eingelassen ist,
**dass** ein oder mehrere Module (48) hinter einer transparenten Versiegelung (40) angeordnet sind, die als Abdeckung auf das Gehäuse (12) aufgesetzt ist, dass die Leuchtmittel (26, 28) für verschiedene Lichtfunktionen in einem gemeinsamen Modul (48) angeordnet sind, wobei erste Leuchtmittel (26) in Durchbrüche (32a) innerhalb von nach vorne geöffneten Reflektoren (30b) ragen und kranzartig von einer Mehrzahl von zweiten Leuchtmitteln (28) umgeben sind, wobei die ersten und zweiten Leuchtmittel (26, 28) unterschiedlich farbiges Licht abgeben und wobei die Lichtfunktionen wenigstens zwei aus der Gruppe sind Blinklicht, Tagfahrlicht, Seitenmarkierungslicht, Standlicht, Positionslicht, Begrenzungslicht, Umfeldlicht, Totwinkelüberwachungslicht.

2. Außenspiegel nach Anspruch 1, **dadurch gekennzeichnet, dass** die zweiten Leuchtmittel (28) in kleinen Reflektoren sitzen.

3. Außenspiegel nach Anspruch 1 oder 2, **dadurch gekennzeichnet, dass** das oder die Module (42, 48) eine gemeinsame Lichtansteuerungseinheit im Gehäuse (12) aufweisen.

4. Außenspiegel nach einem der vorhergehenden Ansprüche, **dadurch gekennzeichnet, dass** das oder die Module (42, 48) innenseitig an der Rückwand (34) angeordnet ist.

5. Außenspiegel nach einem der vorhergehenden Ansprüche, **dadurch gekennzeichnet, dass** das oder die Module (42, 48) zum Beaufschlagen der verschiedenen Lichtfunktionen elektrische Elemente aufweist, die über wenige Platinen im Hohlraum (32) aufgeteilt sind.

6. Außenspiegel nach einem der vorhergehenden Ansprüche, **dadurch gekennzeichnet, dass** in der Rückwand (34) wenigstens eine nach rückwärts gerichtete Vertiefung (30) eingebracht ist, die einen Durchbruch (36) für ein Leuchtmittel (20, 26, 28) aufweist, welches vom Hohlraum (16) nach außen weist.

7. Außenspiegel nach Anspruch 6, **dadurch gekennzeichnet, dass** die wenigstens eine Vertiefung (30) oval ausgebildet sind.

8. Außenspiegel nach Anspruch 6 oder 7, **dadurch gekennzeichnet, dass** die wenigstens eine Vertiefung (30) rund ausgebildet ist.

9. Außenspiegel nach einem der Ansprüche 6 bis 8, **dadurch gekennzeichnet, dass** die wenigstens eine Vertiefung (30) als Reflektor des Leuchtmittels (20) dient.

10. Außenspiegel nach einem der Ansprüche 6 bis 9, **dadurch gekennzeichnet, dass** die ovale Vertiefung (30) etwa waagrecht angeordnet ist, wobei das Leuchtmittel (20) im Bereich eines spiegelnahen Rands (44) angeordnet ist und die Vertiefung (30) sich vom Rand (44) weg erstreckt.

11. Außenspiegel nach einem der vorhergehenden Ansprüche, **dadurch gekennzeichnet, dass** die Vertiefung (30) so tief ausgebildet ist, dass eine seitliche Erkennbarkeit der Lichtfunktion gegeben ist.

12. Außenspiegel nach einem der vorhergehenden Ansprüche, **dadurch gekennzeichnet, dass** jedes Leuchtmittel (20, 22, 24, 26, 28) mit einer nach außen abdichtenden Versiegelung (40) versehen ist.

13. Außenspiegel nach Anspruch 12, **dadurch gekennzeichnet, dass** die Versiegelung (40) als klare Schicht über den Leuchtmitteln (20, 22, 24, 26, 28) angeordnet ist.

14. Außenspiegel nach einem der vorhergehenden Ansprüche, **dadurch gekennzeichnet, dass** die Leuchtmittel (20, 22, 24, 26, 28) so vorgesehen sind, dass unterschiedliche Farben darstellbar sind.

## Claims

1. An exterior vehicle mirror with an opening (36) in a housing (12) with a cavity (16) into which a mirror (18) can be received, and a forward-oriented back wall (34) with an exterior surface (14), said opening (36) being oriented backward in the mounted state and said back wall (34) bordering the cavity (16), wherein at least two different light functions can be performed on the exterior surface (14) and/or on the mirror (18), wherein the light functions comprise light emitting means (20, 22, 24, 26, 28) that are combined in one or several modules (42, 48) within the housing (12), **characterized in that** the light emitting means (26, 28) are arranged in an insert forming one of the modules (48) that is embedded in the back wall (34),
that one or several modules (48) is/are arranged behind a transparent seal (40) that is placed on the housing (12) as a cover,
that the light emitting means (26, 28) for different light functions are arranged in a common module (48), wherein first light emitting means (26) project into openings (32a) within forward-opened reflectors (30b) and are surrounded by a collar-like plurality of second light emitting means (28), wherein the first and second light emitting means (26, 28) emit light of different colors and wherein the light functions are at least two functions selected from the group consisting of flashlight, daytime running light, side marker light, parking light, position light, side light, environment lighting, and blind spot monitoring light.

2. The exterior mirror according to claim 1, **characterized in that** the second light emitting means (28) are arranged in small reflectors.

3. The exterior mirror according to claim 1 or 2, **characterized in that** the module/s (42, 48) has/have a common light activation unit in the housing (12).

4. The exterior mirror according to any one of the preceding claims, **characterized in that** the module/s (42, 48) is/are arranged on the interior surface of the back wall (34).

5. The exterior mirror according to any one of the preceding claims, **characterized in that** the module/s (42, 48) has/have electrical elements for activating the various light functions, which electrical elements are distributed over few circuit boards in the cavity (32).

6. The exterior mirror according to any one of the preceding claims, **characterized in that** at least one backward-oriented indentation (30) is disposed in the back wall (34), said indentation (30) having an opening (36) for a light emitting means (20, 26, 28) that faces outward from the cavity (16).

7. The exterior mirror according to claim 6, **characterized in that** the at least one indentation (30) is oval.

8. The exterior mirror according to claim 6 or 7, **characterized in that** the at least one indentation (30) is round.

9. The exterior mirror according to any one of claims 6 to 8, **characterized in that** the at least one indentation (30) serves as a reflector of the light emitting means (20).

10. The exterior mirror according to any one of claims 6 to 9, **characterized in that** the oval indentation (30) is arranged approximately horizontally, wherein the light emitting means (20) is arranged in the region of an edge (44) that is close to the mirror and the indentation (30) extends away from the edge (44).

11. The exterior mirror according to any one of the preceding claims, **characterized in that** the depth of the indentation (30) is such that the light function can be seen from the side.

12. The exterior mirror according to any one of the preceding claims, **characterized in that** each light emitting means (20, 22, 24, 26, 28) is provided with a seal (40) sealing toward the outside.

13. The exterior mirror according to claim 12, **characterized in that** the seal (40) is arranged as a clear layer over the light emitting means (20, 22, 24, 26, 28).

14. The exterior mirror according to any one of the preceding claims, **characterized in that** the light emitting means (20, 22, 24, 26, 28) are provided in such a manner that different colors can be emitted.

## Revendications

1. Rétroviseur extérieur d'un véhicule ayant une ouverture (36) orientée vers l'arrière à l'état monté dans un logement (12) ayant un espace creux (16), dans lequel un miroir (18) peut être logé, ainsi qu'une paroi arrière (34) orientée vers l'avant, délimitant l'espace creux (16) avec une surface extérieure (14), de sorte qu'au moins deux fonctions lumineuses différentes peuvent être représentées sur la surface extérieure (14) et/ou sur le miroir (18), les fonctions lumineuses comprenant des moyens lumineux (20, 22, 24, 26, 28) qui sont réunis au sein du logement (12) en un ou plusieurs modules (42, 48), **caractérisé en ce que**
les moyens lumineux (26, 28) sont disposés dans un insert formant un des modules (48), qui est introduit dans la paroi arrière (34),
un ou plusieurs modules (48) sont agencés derrière un scellement transparent (40), qui est installé en tant que capot du logement (12),
les moyens lumineux (26, 28) pour des fonctions lumineuses différentes sont installés dans un module commun (48), de sorte que des premiers moyens lumineux (26), à l'intérieur de percements (32a), sont entourés sur le dessus par des réflecteurs (30b) ouverts vers l'avant, et en bordure par plusieurs deuxièmes moyens lumineux (28), de sorte que les premiers et deuxièmes moyens lumineux (26, 28) fournissent des lumières d'une couleur différente, et de sorte que
les fonctions lumineuses sont au moins deux parmi le groupe que sont le feu clignotant, le feu diurne, le feu de marquage latéral, le feu de veille, le feu de position, le feu de délimitation, le feu de champ périphérique, le feu de surveillance de l'angle mort.

2. Rétroviseur extérieur selon la revendication 1, **caractérisé en ce que** les deuxièmes moyens lumineux (28) sont placés dans de petits réflecteurs.

3. Rétroviseur extérieur selon la revendication 1, **caractérisé en ce que** le ou les modules (42, 48) présentent un module de commande lumineuse commun dans le logement (12).

4. Rétroviseur extérieur selon la revendication 1 ou 2, **caractérisé en ce que** le ou les modules (42, 48) sont disposés du côté interne sur la paroi arrière (34).

5. Rétroviseur extérieur selon l'une quelconque des revendications précédentes, **caractérisé en ce que** le ou les modules (42, 48) présentent des éléments électriques pour solliciter les différentes fonctions lumineuses, qui sont répartis sur quelques disques dans l'espace creux (32).

6. Rétroviseur extérieur selon l'une quelconque des revendications précédentes, **caractérisé en ce qu'**au moins un renfoncement (30) orienté vers l'arrière est réalisé dans la paroi arrière (34), lequel présente un percement (36) pour un moyen lumineux (20, 26, 28), qui est tourné vers l'extérieur depuis l'espace creux (16).

7. Rétroviseur extérieur selon la revendication 6, **caractérisé en ce que** le au moins un renfoncement (30) est réalisé de forme ovale

8. Rétroviseur extérieur selon la revendication 6 ou 7, **caractérisé en ce que** le au moins un renfoncement (30) est réalisé de forme ronde.

9. Rétroviseur extérieur selon l'une quelconque des revendications 6 à 8, **caractérisé en ce que** le au moins un renfoncement (30) sert de réflecteur du moyen lumineux (20).

10. Rétroviseur extérieur selon l'une quelconque des revendications 6 à 9, **caractérisé en ce que** le renfoncement ovale (30) est disposé de manière approximativement horizontale, le moyen lumineux (20) étant disposé dans la région d'un bord proche du miroir (44), et le renfoncement (30) s'étendant à l'écart du bord (44).

11. Rétroviseur extérieur selon l'une quelconque des revendications précédentes, **caractérisé en ce que** le renfoncement (30) est réalisé de manière si profonde qu'une perceptibilité latérale de la fonction lumineuse en résulte.

12. Rétroviseur extérieur selon l'une quelconque des revendications précédentes, **caractérisé en ce que** chaque moyen lumineux (20, 22, 24, 26, 28) est pourvu d'un scellement (40) fournissant une étanchéité vis-à-vis de l'extérieur.

13. Rétroviseur extérieur selon la revendication 12, **caractérisé en ce que** le scellement (40) est disposé en tant que couche transparente au-dessus des moyens lumineux (20, 22, 24, 26, 28).

14. Rétroviseur extérieur selon l'une quelconque des revendications précédentes, **caractérisé en ce que** les moyens lumineux (20, 22, 24, 26, 28) sont prévus de sorte que différentes couleurs peuvent être représentées.
